# EUROPEAN PATENT SPECIFICATION

(11) **EP 2 834 897 B1**
(45) Date of publication and mention of the grant of the patent: **27.05.2020**
(21) Application number: 13713435.9
(22) Date of filing: 28.03.2013
(51) Int. Cl.: H02H 11/00

(54) **BACKUP POWER SYSTEM AND GROUNDING DEVICE FOR A BACKUP POWER SYSTEM**
RESERVESTROMSYSTEM UND ERDUNGSVORRICHTUNG FÜR EIN RESERVESTROMSYSTEM
SYSTÈME D' ALIMENTATION ÉLECTRIQUE DE SECOURS ET DISPOSITIF DE MISE À LA TERRE POUR UN SYSTÈME D' ALIMENTATION ÉLECTRIQUE DE SECOURS

(30) Priority: 30.03.2012 DE 102012102766
(43) Date of publication of application: 11.02.2015
(73) Proprietor: SMA Solar Technology AG, 34266 Niestetal (DE)
(72) Inventor: ALLERT, Claus, 34260 Kaufungen (DE); HEINZE, Sebastian, 20253 Hamburg (DE); MÜLLER, Jens-Uwe, 34246 Vellmar (DE)
(86) International application number: PCT/EP2013/056773
(87) International publication number: WO 2013/144316

(56) References cited:
- DE-U1-202010 008 123
- US-A- 6 091 591

## Description

The invention relates to a grounding device for a backup power system for connecting a neutral conductor of a load arrangement to a local ground connector when the load arrangement is isolated from an energy supply grid. The invention furthermore relates to a backup power system comprising such a grounding device.

Backup power systems are used for providing electrical energy to a consumer load arrangement in case that a superordinate public energy supply grid, also called public power grid, cannot provide this energy, for example as a result of a failure of and/or a fault on the superordinate energy supply grid. A switchover device in this case performs the necessary isolation of the load arrangement from the energy supply grid and the subsequent connection to a local energy generation device, such as, for example, a generator, a photovoltaic system and/or an inverter, which is coupled to an energy storage device, for example a battery. Such a backup power system for switchover from a normal operating mode with supply via an energy supply grid to an island operating mode with supply by a local energy producer is known, for example, from the document EP 1 965 483 A1.

In particular in the case of an energy supply grid in the form of a TT system (Terre-Terre system), it is necessary for the load arrangement to be isolated from the energy supply grid at all poles when the load arrangement is supplied with locally provided electrical energy in the island operating mode. In the case of isolation at all poles, the neutral conductor or PEN conductor which is grounded within the energy supply grid is also isolated. Owing to the isolation, there is then no grounding of the neutral conductor of the load arrangement in the island operating mode. This can result in problems with residual current circuit breakers used since the residual current cannot be dissipated correctly via ground and, as a result, the ground-fault loop is not closed and the residual current circuit breaker therefore does not trip. Generally the alternative to these residual current circuit breakers, namely the application of insulation monitoring devices, cannot be used in the systems under consideration here.

In order to circumvent this problem, document DE 10 2010 000 502 A1 discloses connecting the PEN conductor in the load arrangement permanently to a grounding connector via a resistor, i.e. applying ground potential to said PEN conductor. In some energy supply grids, however, there are guidelines set by the operators of the energy supply grids which are not met by this procedure. In addition, any residual current circuit breakers which may be provided and which belong directly to the system connection can already trip as a result of the current flowing via the resistor in the system operating mode without there being a fault.

Furthermore, the document DE 20 2010 008 123 U1 discloses connecting the neutral conductor of the load arrangement via a switch to a local grounding connector in the island operating mode. In this way, grounding of a neutral conductor in the load arrangement can be provided without permanent grounding that sometimes is not conform to guidelines. In the case of such a switched grounding connection, however, there is the risk of a connection being provided by actuation of the grounding switch, but this connection not being realized or only being realized with an insufficiently low contact resistance owing to contact problems with the switch or another defect and therefor protection against personal injury no longer being ensured. Switching devices are known in which, in addition to a main switch, an auxiliary switch which is positively driven by the main switch is also provided and that the auxiliary switch can be used to ascertain the switching state of the main switch. However, by virtue of such an auxiliary switch, it is only possible to safely ascertain that the main switch is open, but not whether the main switch is closed with a low contact resistance.

Circuits which determine the contact resistance of a switch by impressing a low current and measuring a voltage drop and which can thus monitor correct closing of the switch are known from the prior art, for example from document EP 0 435 686 B1. Such a method can in principle also be used in a grounding switch, but this is associated with additional complexity.

It is therefore an object of the present invention to specify a grounding device and a backup power system which can connect a neutral conductor of a load arrangement to a local grounding connection as required in case of isolation from an energy supply grid, wherein it is ensured that energy is also supplied to the load arrangement via a local energy supply device only when there is correct low-resistance grounding of the neutral conductor of the load arrangement.

This object is achieved by a grounding device for a backup power system having the features of the independent claim. This object is also achieved by a backup power system with such a grounding device. Advantageous configurations and developments of the grounding device are the subject matter of the dependent claims.

A grounding device according to the invention and of the type mentioned at the outset is characterized by the fact that the neutral conductor of the load arrangement is connected to a neutral conductor of a local energy supply device via a series circuit comprising two switches, wherein a center tap between the two switches is connected to the local grounding connection.

In case of a grounding device according to the invention, the connection of the neutral conductors of the load arrangement and the energy supply device via the two switches results in a power supply to the load arrangement by the local energy supply device via these switches. As a result of the connection of the center tap between the switches and the grounding connection, the ground potential is applied to the neutral conductor of the supply system, i.e. said neutral conductor is grounded. As a result of the fact that the current for supplying the load arrangement flows from the local energy supply device to the load arrangement via the switches, which simultaneously also perform the grounding, an operating state in which the load arrangement is supplied via the energy supply device without there being any grounding of the neutral conductor of the load arrangement is ruled out.

In another embodiment of the grounding device, the two switches are static switches of a common switching device which are closed when the switching device has not been actuated. The common switching device can thus be connected in parallel with a switching device which connects the load arrangement to an energy supply grid via operating switches (closing contacts). When the operating switches open and the load arrangement is isolated from the energy supply grid, the grounding via the grounding device takes place.

In a further advantageous configuration of the grounding device, at least one further switch is arranged in parallel with the series circuit comprising two switches, wherein the at least one further switch is reversely coupled to at least one of the two switches. In this sense, reversely coupled means that the at least one further switch is open when the at least one of the two switches is closed, and vice versa. Charging of an energy store, for example a battery, of the local energy supply device from the energy supply grid can take place via these further switches without effecting grounding.

In further advantageous configurations of the grounding device, an additional switch is connected in parallel with each of the two switches or at least one additional further switch is connected in parallel with the at least one further switch. These additional switches are thus provided with redundancy with respect to the actual (primary) switches of the grounding device and further increase the functional reliability of the grounding device. Furthermore, the additional switches are suitable for ensuring interruption-free operation of the consumer device when they are actuated with a time offset with respect to the primary switches.

In a further advantageous configuration of the grounding device, an additional circuit for monitoring a contact resistance of the switch in the closed state is provided in parallel with at least one of the switches, said additional circuit having a current or voltage source for a measurement current passed through the switch. This also increases further the functional reliability of the grounding device.

A backup power system according to the invention for optionally operating a load arrangement either on an energy supply grid or a local energy generation device is characterized by such a grounding device. The advantages mentioned in connection with the grounding device according to the invention result correspondingly.

In an advantageous configuration of the backup power system, switches for connecting or isolating the load arrangement to or from the energy supply grid are provided, wherein these switches are coupled to at least one of the two switches of the grounding device. Preferably, the backup power system has a control device for actuating switching devices, which comprises the switches for connecting or isolating the load arrangement to or from the energy supply grid, the switches and the further switches of the grounding device. Particularly preferably, the control device comprises a system failure detector. In this way, the connection of the load arrangement either to the energy supply grid or to the local energy supply device can be made in coordinated fashion with simultaneous local grounding by the control device.

In a further advantageous configuration, the backup power system has a switching device with additional switches, which are connected in parallel with the switches for grounding, wherein this switching device is actuated by the local energy supply device. Preferably, this switching device has at least one further additional switch, which is arranged in parallel with the series connection of the additional switches and which is reversely coupled to at least one of the two additional switches. The additional switches and further additional switches represent redundant switches with respect to the (primary) switches and further switches of the grounding device and increase the functional reliability of the backup power system. The additional switches are actuated by the local energy supply device, in contrast to the primary switches of the grounding device that are switched by the control device. This results in a certain time offset in the switching times of the additional switches and the primary switches. This time offset prevents interruption of the connection between the local grounding device and the load arrangement which could occur when using only one switching device or when the switching devices are actuated synchronously.

The invention will be explained in more detail below with reference to exemplary embodiments with the aid of three figures, in which:
- figure 1: shows a block circuit diagram of a grounding device in a first exemplary embodiment,
- figure 2: shows a block circuit diagram of a backup power system with a grounding device in a second exemplary embodiment, and
- figure 3: shows a monitoring circuit for monitoring switches of a grounding device.

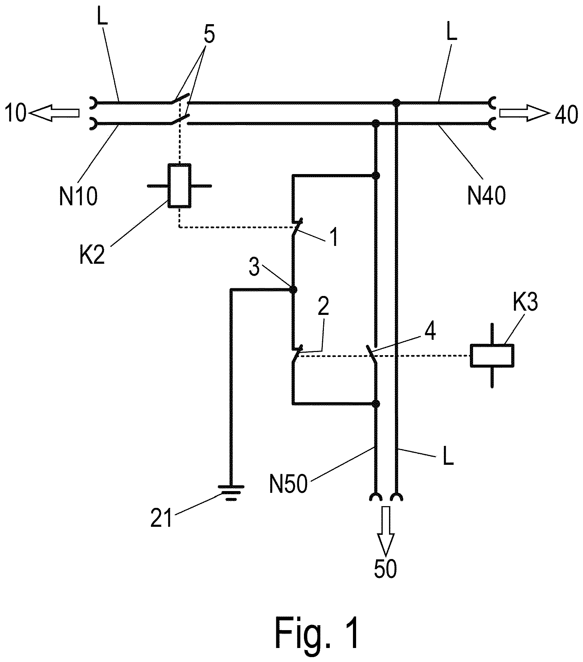

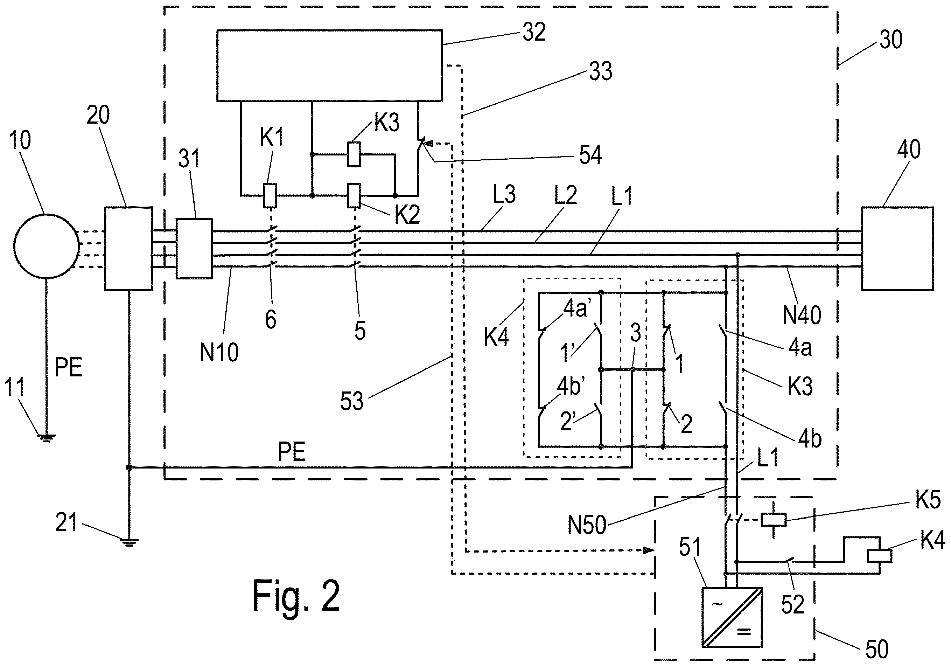

Figure 1 shows a block circuit diagram of a first embodiment of a grounding device for a backup power system. The grounding device has connections with which it is coupled to an energy supply grid 10, a consumer device 40 and a local energy supply device 50, within a backup power system. The energy supply grid 10, the consumer device 40 and the local energy supply device 50 are not illustrated in this figure for reasons of clarity. The reference symbols indicated at the respective connections are selected on the basis of figure 2 explained further below.

Energy is provided via a neutral conductor N10 and a conductor L by the energy supply grid 10, referred to below as system 10. Instead of the indicated single-phase embodiment, a supply system with a plurality of phases and correspondingly a plurality of conductors can also be used. The conductor L and the neutral conductor N10 are connected to a conductor L and a neutral conductor N40 of the load arrangement 40 via two switches 5 which are coupled to one another. Said switches 5 are contact pairs of a switching device K2, for example a contactor.

The switching device K2 is actuated in a normal operating mode of the system 10, for example by a system monitoring device (not shown here). In the normal operating mode of the system 10, the conductor L and the neutral conductor N40 of the load arrangement 40 are connected to the conductor L and the neutral conductor N10 of the system 10, respectively, via switches 5. Therefore, the load arrangement 40 is supplied with energy via the system 10.

The local energy supply device 50 is connected in parallel with the load arrangement 40, wherein, in this embodiment, the conductor L is connected directly to the energy supply device 50.

The neutral conductor N50 of the energy supply device 50 is connected to the neutral conductor N40 of the load arrangement 40 via a series circuit comprising two switches 1, 2. Ground potential PE is applied to a center tap 3 in the series circuit comprising the two switches 1, 2 by a connection to a local ground connector 21. Therefore, grounding of the neutral conductor N40 of the load arrangement 40 can be achieved via the switches 1, 2. The switches 1, 2 are therefore hereinafter referred to as grounding switches 1, 2 so that they can be distinguished more easily from other switches in the arrangement.

In the exemplary embodiment illustrated in figure 1, the grounding switch 1 is a static switch of the switching device K2, i.e. a switch which is closed when the switching device is not actuated. The grounding switch 2 is a static switch of a further switching device K3, which is actuated in parallel with the switching device 2. It is noted that the allocation of the switches 1 and 2 to the switching devices K2, K3 can differ from the grounding device illustrated here in other configurations of the grounding device. For example, provision can be made for the two grounding switches 1 and 2 to be assigned to the further switching device K3, which is actuated together with the switching device K2. In such a case, the switching device K2 is only responsible for the switches 5. Such a case is illustrated in the exemplary embodiment shown in figure 2.

In a normal operating mode of the system 10, the switching device K2 is actuated and the switches 5 are closed and therefore the grounding switch 1 coupled thereto is opened. In the example illustrated, the switches 5 and the grounding switch 1 both belong to the switching device K2and said switches are coupled mechanically and positively driven. Therefore, closing of the switches 5 can only take place when the grounding switch 1 is actually opened. In the event of seizing or sticking, for example due to welding, of the contacts of the grounding switch 1, which results in permanent closing of the grounding switch 1, the switches 5 thus cannot close. This prevents the neutral conductor N40 of the load arrangement 40 from being simultaneously connected to the neutral conductor N10 of the system 10 and to the ground connector 21 via the grounding switch 1.

Furthermore, the neutral conductor N40 of the load arrangement 40 is coupled to the energy supply device 50 via a further switch 4. The further switch 4 is an operating switch (normally open switch) of the switching device K3. The switch 4 is therefore positively coupled, in opposition, to the grounding switch 2. The energy supply device 50 is also connected to the system 10 via the further switch 4 during normal operation, in which the load arrangement 40 is connected to the system 10. The energy supply device 50 comprises, for example, a battery inverter, which is coupled to a battery as energy storage device. The supply of the energy supply device 50 from the system 10 then serves to recharge or to maintain the charged state of the battery of the energy supply device 50, for example. The further switch 4 is therefore referred to as a charging switch below in order to make it easier to distinguish it from other switches in the arrangement.

In a fault operating state of the supply system 10, the switching devices K2 and K3 are deactivated. As a result, the switches 5 open and isolate both the load arrangement 40 and the energy supply device 50 from the system 10. The neutral conductor N40 of the load arrangement 40 is also isolated from the neutral conductor N50 of the energy supply device 50 by opening the charging switch 4.

However, this connection is then reproduced via the series circuit comprising the closed grounding switches 1 and 2. When both grounding switches 1, 2 are closed, a supply of the load arrangement 40 via the energy supply device 50 takes place. Owing to the connection of the center tap 3 between the grounding switches 1, 2 and the grounding connection 21, it is then ensured in this case that ground potential PE is applied to the neutral conductor N40 of the supply system 40. Current flows from the energy supply device 50 to the load arrangement 40 via the grounding switch 1. Simultaneously, the grounding switch 1 also provides the connection between the neutral conductor N40 of the load arrangement 40 and the grounding connector 21. Accordingly, an operating state in which the load arrangement 40 is supplied via the energy supply device 50 without there being grounding of the neutral conductor N40 of the load arrangement 40 is ruled out.

The allocation of the switches 1, 2, 4 to the switching devices K2, K3 may deviate from the grounding device illustrated here in further configurations of said grounding device. For example, the two grounding switches 1 and 2, which produce the connection between the energy supply device 50 and the load arrangement 40 in event of failure of the supply system 10, can jointly be associated with a switching device, for example the switching device K3. The switching device K3 is then, for example, a contactor with at least three switches 1, 2 and 4, wherein the switches 1 and 2 are static switches (with normally closed contacts) and the further switch 4 is an operating switch (with normally open contacts). Mutual electromechanical interlocking can take place via additional auxiliary contacts in the switching device K2 and the switching device K3 in order, for example, to prevent the switching device K2 from being actuated (and therefore the connection to the system 50 being produced via 5) as long as the further switching device K3 is not actuated and therefore the grounding of N40 via switch 1, center tap 3 and local ground connector 21 is active.

Figure 2 shows a block circuit diagram of a backup power system with a grounding device in accordance with the application. Identical reference symbols in this case denote identical or functionally identical elements to those in figure 1.

The backup power system is connected to a superordinate energy supply grid 10, which has, in this case by way of example, the topology of a TT system that does not provide any separate grounding line as a PE conductor. Instead, a neutral conductor of the energy supply grid 10 is connected to a grounding connection 11 in the system 10 at a suitable point in order to provide a ground potential PE in the supply system 10. The grounding device according to the application can likewise be used in connection with an energy supply grid with a different topology.

In an electrical service connection region 20, also called connection point, a local grounding connection 21 is provided, which provides a PE conductor, for example for grounding loads. The potential at the local grounding connection 21 referred to below as ground potential PE even when potential differences with respect to the ground connection 11 of the supply system 10 can result.

The service connection 20 is now connected both to a load arrangement 40 and to a local energy supply device 50 via a switchover device 30. In the example shown, the switchover device 30 has an optional energy meter 31, with three conductors L1, L2, L3, also referred to as phases, and a neutral conductor N10 of the system 10 being provided at the output of said energy meter. The three conductors L1 to L3 and the neutral conductor N10 of the system 10 are connected to corresponding conductors L1 to L3 and a neutral conductor N40 of the load arrangement 40 via switches 5, 6. The switches are each operating switches (normal open contacts) of two switching devices K1 and K2, for example of contactors. The provision of two series-connected switches 5, 6 is done for redundancy reasons in order to ensure that complete isolation of the load arrangement 40 from the supply system 10 takes place. The contactors K1 and K2 are actuated via a control device 32 of the switchover device 30. The latter comprises, for example, a system fault detector, which actuates the contactors K1 and K2 corresponding to an operating state of the system 10.

The neutral conductor N40 and one of the conductors, in this case the conductor L1 of the load arrangement 40, by way of example, is connected to a local energy supply device 50. The local energy supply device 50 comprises a battery inverter 51, which is connected on the DC side to a battery as an energy storage device (not illustrated in the figure) and on the AC side supplies power the load arrangement 40 on at least one phase via a switching device K5 in the event of a fault on the system 10. Further local energy supply units, for example a photovoltaic system and/or a generator, can be used in addition to the energy supply in the event of a fault. The system fault detector can also be provided within the local energy supply device 50, in particular in the battery inverter 51, instead of in the control device 32.

The energy supply device 50 is connected to the control device 32 via a control line 33. Furthermore, an interlocking line 53 is provided, via which an interlocking switch 54 can be switched via the local energy supply device 50. The interlocking switch 54 acts on the switching devices K2 and K3. In addition to the wired interlocking via the control line 33, wireless communication can also be used.

In this exemplary embodiment, the grounding device comprises two switch groups, of which a first is associated with the switching device K3 and comprises two series-connected grounding switches 1, 2 and two likewise series-connected charging switches 4a, 4b. The second group is associated with a further switching device K4 and has two additional grounding switches 1' and 2' and two additional charging switches 4a' and 4b'.

As in the embodiment shown in figure 1, the grounding switches 1, 2 are connected to the local grounding connection 21 via an interposed center tap 3, and thus ground potential PE is applied to said grounding switches. The series circuit comprising the charging switches 4a, 4b is arranged in parallel with the series circuit comprising the grounding switches 1, 2. The charging switches 4a, 4b are actuated jointly and, in terms of their function, correspond to the function of the charging switch 4 in the exemplary embodiment shown in figure 1.

In the normal operating state of the system 10, in which the switching devices K1 and K2 are activated and all of the associated switches are thus closed and the load arrangement 40 is connected to the supply system 10, correspondingly the charging switches 4a and 4b are closed in order to supply energy from the supply system 10 to the battery inverter 51, for example for charging the energy store, via the likewise actuated switching device K5. In the normal operating state, in addition the control switch 52 is open and the switching device K4 is not activated. The additional charging switches 4a' and 4b' are static switches and are therefore likewise closed in this operating state. They provide a current path in parallel with the charging switches 4a, 4b.

In the event of failure of the system 10, the switching devices K1 and K2 are deactivated and the load arrangement 40 is isolated from the supply system 10. The switching device K3 is disconnected in parallel with the switching device K2, as a result of which the charging switches 4a, 4b open and the grounding switches 1, 2 close and ground the neutral conductor N40 of the load arrangement 40. The initially still closed additional charging switches 4a' and 4b' in this case prevent a short-term interruption of the connection between the local energy supply device 50 and the load arrangement 40, which would arise as a result of the switchover operation of the switching device K3 if the second switch group associated with the switching device K4 were not provided. The switching device K4 is then actuated via the control switch 52 with a small time offset with respect to the switching device K3, as a result of which the corresponding additional grounding switches 1' and 2' close and then provide redundant grounding of the neutral conductor N40 of the load arrangement 40.

On recovery of the system 10, the switching sequence of the switching devices K1-K4 will advantageously be in reverse. The switching device K4 is disconnected first, and then, again with a small time offset, the switching devices K3 and K1 and K2 are activated.

In addition to the grounding and charging switches 1, 2, 4a, 4b and 1', 2', 4a', 4b' of the switching devices K3 and K4, respectively, said switching devices can have auxiliary switches, which interact with the interlocking switch 54 so as to prevent defective switching devices K3 or K4 or jammed contacts of their switches possibly resulting in grounding of the neutral conductor N10 during normal operation of the system 10.

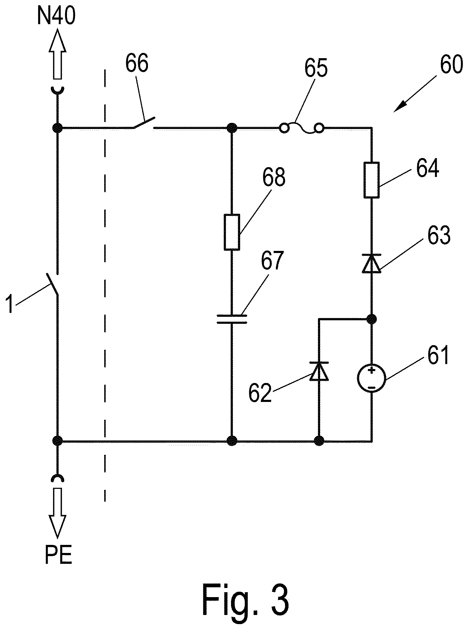

Figure 3 shows an additional circuit 60, which serves to monitor a grounding switch of a grounding device. The additional circuit can be used, for example, in connection with one of the grounding switches 1, 2 or 1', 2' of the exemplary embodiments shown in figure 1 or 2. It is noted that such an additional circuit can also be used for monitoring a switch of a grounding device which is not in accordance with the application.

The additional circuit 60 comprises a current or voltage source 61, referred to below as source 61, for short, with a parallel-connected bypass diode 62. The source 61 is connected to a connection, in this case with its negative connection to one of the connections of a grounding switch 1, for example. The other connection of the source 61 is connected via a diode 63, a measuring resistor 64, a fuse 65 and a switch 66 to the other connection of the grounding switch 1 to be monitored. The diodes 62 and 63 and the fuse 65 in this case serve to protect the additional circuit itself and in particular the source 61.

The switch 66 can be coupled mechanically to the grounding switch 1, with the result that it is likewise closed when the grounding switch 1 is closed. If both switches 1, 66 are closed, the voltage drop across the measuring resistor 64 is measured. A resistance occurring in addition in this circuit can be determined from the voltage drop, wherein this resistance may be a result of an excessively high contact resistance of the grounding switch 1, for example.

In addition, a capacitor 67 and a low-resistance resistor 68 are optionally connected in parallel with the series circuit comprising the switch 66 and the grounding switch 1 to be monitored. When the switches 1, 66 are open, the capacitor 67 is charged to a maximum voltage predetermined by the source 61. After closing of the switches 1 and 66, the capacitor 67 is discharged via the two switches 1, 66 with a current that is only limited by the resistor 68,. The resistor 68 and the capacitor 67 are in this case designed such that, at least for a short period of time, a current surge flows through the switches 1, 66 with a sufficient current level for removing an oxide layer formed between the contacts of the switches 1, 66. This process is also referred to as clearing of the contacts by burnoff. If the capacitor 67 has been discharged, the actual measurement current at the source 61 and the measuring resistor 64 is set by the switches 1, 66, via which the correct, low-resistance closing of the grounding switch 1 is monitored.

In the grounding device according to the application, the contacts of the grounding switch 1 are also kept free of oxide layers as a result of the consumer current, which flows from the local energy supply device 50 to the load arrangement 40 via the grounding switch 1 in the event of a system fault. The generation of a current surge via the capacitor 67 is therefore less relevant for a grounding device according to the application than in grounding devices in which the neutral conductor of the load arrangement is grounded via a single grounding switch.

In particular in the embodiment of the additional circuit with the capacitor 67 and the resistor 68, the switch 66 is necessary since, otherwise, charging of the capacitor 67 is impossible in most cases when the grounding switch 1 is open because the neutral conductor N40 of the load arrangement is interconnected with the neutral conductor N10 of the supply system during normal operation of the supply system 10 (cf. figures 1 and 2), and this neutral conductor N10 is at ground potential. Charging of the capacitor 67 would therefore be impossible when the grounding switch 1 is open without the switch 66. In any case, the switch 66 is additionally advantageous for decoupling the additional circuit and in particular the source 61 from the neutral conductor N10 of the supply system, as a result of which this is protected from an overvoltage which may occur on the neutral conductor with respect to ground potential PE.

### List of reference symbols

- 1, 2: Switch (grounding switch)
- 3: Center tap
- 4: Further switch (charging switch)
- 5, 6: Switch (system isolation point)

- 10: Energy supply grid
- 11: Ground connection of the supply system

- 20: Electrical service connection
- 21: Local ground connector

- 30: Switchover device
- 31: Meter
- 32: Control device
- 33: Control line

- 40: Load arrangement

- 50: Local energy supply device
- 51: Battery inverter
- 52: Control switch
- 53: Interlocking line
- 54: Interlocking switch

- 60: Additional circuit
- 61: Current or voltage source
- 62: Bypass diode
- 63: Diode
- 64: Measuring resistor
- 65: Fuse
- 66: Switch
- 67: Capacitor
- 68: Resistor

- K1 to K5: Switching device

- N10: Neutral conductor of supply system
- N40: Neutral conductor of load arrangement
- N50: Neutral conductor of local energy supply device

- L, L1, L2, L3: Conductor
- PE: Ground potential

## Claims

1. A backup power system comprising a grounding device for connecting a neutral conductor (N40) of a load arrangement (40) to a local ground connector (21) when the load arrangement (40) is isolated from an energy supply grid (10), **characterized in that** the neutral conductor (N40) of the load arrangement (40) is connected to a neutral conductor (N50) of a local energy supply device (50) via two series- connected switches (1, 2), wherein the two switches (1, 2) are switches with normally closed contacts, and wherein a center tap (3) between the two switches (1, 2) is connected to the local grounding connector (21), and wherein at least one further switch (4, 4a, 4b) is arranged in parallel with the two series-connected switches (1, 2), the at least one further switch (4) being reversely coupled to at least one of the two switches (1, 2).

2. The backup power system as claimed in claim 1, wherein the two switches (1, 2) are static switches of a common switching device (K3) which are closed when the switching device (K3) has not been actuated.

3. The backup power system as claimed in claim 1 or 2, wherein an additional switch (1', 2') is connected in parallel with each of the two switches (1, 2).

4. The backup power system as claimed in one of claims 1 to 3, wherein at least one additional further switch (4a', 4b') is connected in parallel with the at least one further switch (4, 4a, 4b).

5. The backup power system as claimed in one of claims 1 to 4, wherein an additional circuit (60) for monitoring a contact resistance of the switch (1, 2) in the closed state is provided in parallel with at least one of the two switches (1, 2), said additional circuit comprises a current or voltage source (61) to cause a measurement current through the switch (1, 2).

6. The backup power system as claimed in one of claims 1 to 5, wherein at least one switch (5, 6) is provided for connecting or isolating the load arrangement (40) to or from the energy supply grid (10), wherein the at least one switch (5, 6) is coupled to at least one of the two switches (1, 2) of the grounding device.

7. The backup power system as claimed in claim 6, having a control device (32) for actuating switching devices (K1-K3), the switching devices (K1-K3) comprising the switches (5, 6) for connecting or isolating the load arrangement (40) to or from the energy supply grid (10), the two switches (1, 2) and the further switches (4, 4a, 4b) of the grounding device.

8. The backup power system as claimed in claim 7, with the control device (32) comprising a system failure detector.

9. The backup power system as claimed in claim 3, having a switching device (K4) providing the additional switches (1', 2'), which are connected in parallel with the two switches (1, 2), wherein the switching device (K4) is actuated by the local energy supply device (50).

10. The backup power system as claimed in claim 9, wherein the switching device (K4) comprises at least one further additional switch (4a', 4b'), which is arranged in parallel with the series connection of the additional switches (1', 2') and which is reversely coupled to at least one of the two additional switches (1', 2').

## Patentansprüche

1. Notstromversorgungssystem mit einer Erdungsvorrichtung zum Verbinden eines Neutralleiters (N40) einer Lastanordnung (40) mit einem lokalen Erdungsanschluss (21), wenn die Lastanordnung (40) von einem Energieversorgungsnetz (10) isoliert ist, **dadurch gekennzeichnet, dass** der Neutralleiter (N40) der Lastanordnung (40) über zwei in Reihe geschaltete Schalter (1, 2) mit einem Neutralleiter (N50) einer lokalen Energieversorgungsvorrichtung (50) verbunden ist, wobei die beiden Schalter (1, 2) Schalter mit Öffnerkontakten sind, und wobei ein Mittelabgriff (3) zwischen den beiden Schaltern (1, 2) mit dem lokalen Erdungsanschluss (21) verbunden ist, und wobei mindestens ein weiterer Schalter (4, 4a, 4b) parallel zu den beiden in Reihe geschalteten Schaltern (1, 2) angeordnet ist, wobei der mindestens eine weitere Schalter (4) mit mindestens einem der beiden Schalter (1, 2) in umgekehrter Richtung gekoppelt ist.

2. Notstromversorgungssystem nach Anspruch 1, wobei die beiden Schalter (1, 2) statische Schalter einer gemeinsamen Schalteinrichtung (K3) sind, die geschlossen sind, wenn die Schalteinrichtung (K3) nicht betätigt wurde.

3. Notstromversorgungssystem nach Anspruch 1 oder 2, bei dem ein zusätzlicher Schalter (1', 2') parallel zu jedem der beiden Schalter (1, 2) geschaltet ist.

4. Notstromversorgungssystem nach einem der Ansprüche 1 bis 3, bei dem mindestens ein zusätzlicher weiterer Schalter (4a', 4b') parallel zu dem mindestens einen weiteren Schalter (4, 4a, 4b) geschaltet ist.

5. Notstromversorgungssystem nach einem der Ansprüche 1 bis 4, wobei eine zusätzliche Schaltung (60) zur Überwachung eines Kontaktwiderstands des Schalters (1, 2) im geschlossenen Zustand parallel zu mindestens einem der beiden Schalter (1, 2) vorgesehen ist, wobei die zusätzliche Schaltung eine Strom- oder Spannungsquelle (61) umfasst, um einen Messstrom durch den Schalter (1, 2) zu bewirken.

6. Notstromversorgungssystem nach einem der Ansprüche 1 bis 5, wobei mindestens ein Schalter (5, 6) zum Verbinden oder Trennen der Lastanordnung (40) mit dem oder vom Energieversorgungsnetz (10) vorgesehen ist, wobei der mindestens eine Schalter (5, 6) mit mindestens einem der beiden Schalter (1, 2) der Erdungsvorrichtung gekoppelt ist.

7. Notstromversorgungssystem nach Anspruch 6 mit einer Steuereinrichtung (32) zur Betätigung von Schaltvorrichtungen (K1-K3), wobei die Schaltvorrichtungen (K1-K3) die Schalter (5, 6) zum Verbinden oder Trennen der Lastanordnung (40) mit dem oder vom Energieversorgungsnetz (10), den beiden Schaltern (1, 2) und den weiteren Schaltern (4, 4a, 4b) der Erdungsvorrichtung umfassen.

8. Notstromversorgungssystem nach Anspruch 7, wobei die Steuereinrichtung (32) einen Systemfehlerdetektor umfasst.

9. Notstromversorgungssystem nach Anspruch 3, mit einer Schaltvorrichtung (K4), die die zusätzlichen Schalter (1', 2') bereitstellt, die parallel zu den beiden Schaltern (1, 2) geschaltet sind, wobei die Schaltvorrichtung (K4) durch die lokale Energieversorgungseinrichtung (50) betätigt wird.

10. Notstromversorgungssystem nach Anspruch 9, wobei die Schalteinrichtung (K4) mindestens einen weiteren zusätzlichen Schalter (4a', 4b') aufweist, der parallel zur Reihenschaltung der zusätzlichen Schalter (1', 2') angeordnet ist und der mit mindestens einem der beiden zusätzlichen Schalter (1', 2') umgekehrt gekoppelt ist.

## Revendications

1. Système d'alimentation de secours comprenant un dispositif de mise à la terre destiné à brancher un conducteur neutre (N40) d'un agencement de charge (40) à un connecteur de terre locale (21) quand l'agencement de charge (40) est isolé d'un réseau d'approvisionnement énergétique (10), **caractérisé en ce que** le conducteur neutre (N40) de l'agencement de charge (40) est branché à un conducteur neutre (N50) d'un dispositif d'approvisionnement énergétique local (50) par le biais de deux commutateurs branchés en série (1, 2), les deux commutateurs (1, 2) étant des commutateurs avec des contacts normalement fermés, et une prise centrale (3) entre les deux commutateurs (1, 2) étant branchée au connecteur de mise à la terre locale (21), et dans lequel au moins un autre commutateur (4, 4a, 4b) est disposé en parallèle avec les deux commutateurs branchés en série (1, 2), l'au moins un autre commutateur (4) étant couplé à l'envers à au moins un des deux commutateurs (1, 2).

2. Système d'alimentation de secours selon la revendication 1, dans lequel les deux commutateurs (1, 2) sont des commutateurs statiques d'un dispositif de commutation commun (K3) qui sont fermés quand le dispositif de commutation (K3) n'a pas été actionné.

3. Système d'alimentation de secours selon la revendication 1 ou 2, dans lequel un commutateur supplémentaire (1', 2') est branché en parallèle avec chacun des deux commutateurs (1, 2).

4. Système d'alimentation de secours selon une des revendications 1 à 3, dans lequel au moins un autre commutateur supplémentaire (4a', 4b') est branché en parallèle avec l'au moins un autre commutateur (4, 4a, 4b) .

5. Système d'alimentation de secours selon une des revendications 1 à 4, dans lequel un circuit supplémentaire (60) destiné à surveiller une résistance de contact du commutateur (1, 2) dans l'état fermé est disposé en parallèle avec au moins un des commutateurs (1, 2), ledit circuit supplémentaire comprenant une source de courant ou de tension (61) pour induire un courant de mesure à travers le commutateur (1, 2).

6. Système d'alimentation de secours selon une des revendications 1 à 5, dans lequel au moins un commutateur (5, 6) est prévu pour brancher ou isoler l'agencement de charge (40) au ou du réseau d'approvisionnement énergétique (10), l'au moins un commutateur (5, 6) étant couplé à au moins un des deux commutateurs (1, 2) du dispositif de mise à la terre.

7. Système d'alimentation de secours selon la revendication 6, ayant un dispositif de commande (32) destiné à actionner des dispositifs de commutation (K1-K3), les dispositifs de commutation (K1-K3) comprenant les commutateurs (5, 6) destinés à brancher ou isoler l'agencement de charge (40) au ou du réseau d'approvisionnement énergétique (10), aux ou des deux commutateurs (1, 2) et aux ou des autres commutateurs (4, 4a, 4) du dispositif de mise à la terre.

8. Système d'alimentation de secours selon la revendication 7, avec le dispositif de commande (32) comprenant un détecteur de défaillance de système.

9. Système d'alimentation de secours selon la revendication 3, ayant un dispositif de commutation (K4) fournissant les commutateurs supplémentaires (1', 2'), qui sont branchés en parallèle avec les deux commutateurs (1, 2), le dispositif de commutation (K4) étant actionné par le dispositif d'approvisionnement énergétique local (50) .

10. Système d'alimentation de secours selon la revendication 9, dans lequel le dispositif de commutation (K4) comprend au moins un autre commutateur supplémentaire (4a', 4b'), qui est disposé en parallèle avec le branchement série des commutateurs supplémentaires (1', 2') et qui est couplé à l'envers à au moins un des deux commutateurs supplémentaires (1', 2').
